Europäisches Patentamt

European Patent Office

Office européen des brevets

(11) Publication number: **0 089 162**
**B1**

(12) **EUROPEAN PATENT SPECIFICATION**

(45) Date of publication of patent specification: **27.08.86**

(51) Int. Cl.⁴: **C 08 L 9/02, B 32 B 25/16**

(21) Application number: **83301203.2**

(22) Date of filing: **07.03.83**

(54) Bonding elastomers.

(30) Priority: **12.03.82 US 357748**

(43) Date of publication of application:
**21.09.83 Bulletin 83/38**

(45) Publication of the grant of the patent:
**27.08.86 Bulletin 86/35**

(84) Designated Contracting States:
**BE DE FR GB NL SE**

(56) References cited:
**FR-A-2 196 888**
**GB-A-2 072 576**
**US-A-3 157 564**

**KAUTSCHUK UND GUMMI KUNSTSTOFFE,
vol. 34, no. 4, April 1981, pages 280-284,
Heidelberg DE; S. WOLFF: "Reinforcing and
Vulcanization Effects of Silane Si 69 in Silica-
Filled Compounds".**

(73) Proprietor: **POLYSAR LIMITED**
**Sarnia Ontario N7T 7M2 (CA)**

(72) Inventor: **Dunn, John Robert**
**1260 Marcin Road**
**Sarnia Ontario (CA)**

(74) Representative: **Perry, Robert Edward et al
GILL JENNINGS & EVERY 53-64 Chancery Lane
London WC2A 1HN (GB)**

Courier Press, Leamington Spa, England.

## Description

This invention relates to a method of bonding together layers of fluoroelastomer and butadiene-acrylonitrile polymer compounds.

Many composite materials are known, prepared by the bonding together of two layers of different polymeric materials. Improvements in bonding have been achieved by introducing an adhesive layer between the two layers, e.g. as described in GB—A—2072576.

It has long been recognised as difficult to achieve good bonding of a fluoroelastomer compound to a non-fluorine-containing polymeric compound.

Kautschuk und Gummi Kunststoffe, 34(4) (1981) 280—284, discloses the use of bis(3-triethoxysilyl-propyl)tetrasulphide as having reinforcing and vulcanisation effects in silica-filled compounds.

In a method according to the invention, a layer of a fluoroelastomer compound is bonded to a layer of a butadiene-acrylonitrile polymer compound, wherein the fluoroelastomer is a polymer based on vinylidene fluoride and hexafluoropropylene and the butadiene-acrylonitrile polymer is a polymer prepared by free radical aqueous emulsion polymerisation and containing from 50 to 80% by weight butadiene and 20 to 50% by weight acrylonitrile, a polysulphidic silane is incorporated into either or both compounds, prior to bonding the layers together, and the layers are vulcanised in contact with each other, in which the polysulphidic silane is selected from bis[(alkoxysilyl)alkyl]tetrasulphides and bis[(alkoxysilyl)aryl]tetrasulphides.

According to a first aspect of the present invention, the polysulphidic silane is incorporated into the fluoroelastomer compound, in an amount of from 1 to 5 parts by weight per 100 parts by weight of the fluoroelastomer in the compound.

According to a second aspect of the present invention, the polysulphidic silane is incorporated into the butadiene-acrylonitrile polymer compound, in an amount of from 1 to 5 parts by weight per 100 parts by weight of the butadiene-acrylonitrile polymer in the compound.

According to a third aspect of the present invention, the polysulphidic silane is incorporated into both compounds, in an amount of from 1 to 3 parts by weight per 100 parts by weight of the fluoroelastomer and the butadiene-acrylonitrile polymer in the compounds.

The fluoroelastomer which is used in the invention is based on vinylidene fluoride and hexafluoropropylene. It optionally also contains other fluorinated compounds such as tetrafluoroethylene and perfluoromethyl vinyl ether and, optionally, ethylenically-unsaturated olefins. These polymers are produced by high pressure aqueous emulsion polymerisation, generally using fluorocarbon emulsifiers, persulphate initiators and molecular weight control agents. Such polymers are well known commercially. Many such polymers are available with incorporated cure systems, so that the compounder only has to add metallic oxide acid acceptors and fillers, and any other (optional) compounding components, to produce a compound suitable for curing. The exact nature of the individual fluoroelastomers and of the incorporated cure systems are not generally disclosed.

The fluoroelastomer compound used in the invention generally comprises the fluoroelastomer, an incorporated cure system, an inorganic acid acceptor such as magnesium oxide, cadmium oxide, calcium oxide, calcium hydroxide or zinc oxide, and a filler such as carbon black, silica or barytes, and may also include processing aids such as Carnauba Wax, low molecular weight polyethylene and pentaerythritol tetrastearate. Such compounds may be prepared by well known mixing procedures, e.g. using a mill or an internal mixer.

Butadiene-acrylonitrile polymers used in the invention preferably contain from 30 to 40% by weight acrylonitrile and, correspondingly, from 60 to 70% by weight butadiene. Such polymers are well known commercially.

The butadiene-acrylonitrile polymer compound used in the invention generally comprises the butadiene-acrylonitrile polymer, a filler such as carbon black, silica or barytes, optionally a compatible plasticiser such as dioctyl phthalate, dibutyl phthalate, dioctyl adipate, dibutyl sebacate or dioctyl sebacate, a metal oxide such as magnesium, cadmium, calcium or zinc oxide, an antioxidant, especially those having low volatility, an organic peroxide such as dicumyl, lauryl or benzoyl peroxide, and a curing coagent for use with organic peroxides such as phenylene dimaleimide and the various di- and tri-(meth)acrylates. Small amounts of fluoroelastomer may also be mixed with the butadiene-acrylonitrile polymer, such that there are no more than 25% by weight of the fluoroelastomer, by weight of the fluoroelastomer-butadiene-acrylonitrile polymer mixture. Such compounds may be prepared by well known mixing procedures, e.g. using a mill or an internal mixer.

The polysulphidic silane is, for example, bis[3-(triethoxysilyl)propyl]tetrasulphide or bis[(triethoxysilyl)ethyltolylene]tetrasulphide. The amount of polysulphidic silane is preferably from 1.5 to 4 parts by weight per 100 parts by weight of the fluoroelastomer or of the butadiene-acrylonitrile polymer. The polysulphidic silane may be readily added to the fluoroelastomer compound or to the butadiene-acrylonitrile polymer compound at the same time as the other compounding ingredients are being added. For economy, it is preferred to add polysulphidic silane to only one compound; in practice, addition to the butadiene-acrylonitrile polymer compound generally gives satisfactory results.

The fluoroelastomer compound and the butadiene acrylonitrile polymer compound are formed into sheets of appropriate thickness. The surfaces of the sheets may be wiped clean, for example with any of the well known surface cleaning agents such as cyclohexanone. The sheets are laid one on top of another, placed in a mould and vulcanised by heating, e.g. to 150 to 180°C for from 10 to 60 minutes.

A laminate product of the invention may be used as a hose, the inner layer being the fluoroelastomer compound and the outer layer being the butadiene-acrylonitrile polymer compound. Such hoses may be used for the transfer of various organic materials and also fuel.

Products of the invention may also be used, for example, for lining vessels and as membranes.

A hose may be manufactured by producing an inner core from a laminate of the invention, covering the core with reinforcement in the form of a braid or spiral, and vulcanising the whole. Either layer of the laminate may contain the polysulphidic silane. The core may be reinforced by encasing it with a suitable yarn or wire braid or spiral. The reinforced core may optionally have a cover applied. The whole assembly is then vulcanized by heating. It is also possible to use various techniques to reduce neckdown or flattening of the core during processing such as by using microwave energy to partially vulcanize the core.

The following examples illustrate the present invention. All amounts are in parts by weight.

Example 1

Fluoroelastomer compounds and butadiene-acrylonitrile polymer compounds were prepared by mixing on a two roll rubber mill according to the recipes shown in Table I. Layers of the two compounds, about 0.15 cm thick, were surface cleaned by mixing with cyclohexanone, pressed one on top of the other in a mold and cured by heating for 45 minutes at 160°C. The peel strength of the so-formed laminates was determined using an Instron tester to separate the laminate at a separation speed of 30 cm/min. with the results shown in Table II.

TABLE I

| | Compound 1 | Compound 2 |
|---|---|---|
| Fluoroelastomer | | |
| — Fluorel 2182® | 100 | — |
| — Fluorel 2182-A® | — | 100 |
| Carbon black | 30 | 25 |
| Barytes | — | 25 |
| Magnesium oxide | 3 | 3 |
| Calcium hydroxide | 6 | 3 |
| Carnauba wax | 0.5 | 2 |
| Polyethylene | 1 | — |

| | Compound 3 | Compound 4 |
|---|---|---|
| Butadiene-acrylonitrile polymer | 100 | 100 |
| Antioxidant | 2 | 2 |
| Magnesium oxide | 3 | 3 |
| Calcium oxide | 3 | 3 |
| Carbon black | 25 | 25 |
| Barytes | 25 | 25 |
| Phenylene dimaleimide | 1 | 1 |
| Dicumyl peroxide | 3.5 | 3.5 |
| Polysulphidic silane | — | 2 |

TABLE II

Peel strength (kN/m)

| | |
|---|---|
| Compound 1 to Compound 3 | 0.6 |
| Compound 1 to Compound 4 | 0.8 |
| Compound 2 to Compound 3 | 0.6 |
| Compound 2 to Compound 4 | 1.5 |

The improved adhesion to Compound 4 is readily seen.

Example 2

Butadiene-acrylonitrile polymer compounds were prepared according to the recipes shown in Table III. Laminates were prepared by pressing sheets of these compounds to sheets of Compound 2 of Example 1 and curing by heating at 160°C for 45 minutes. The peel strength of the laminates was determined with the results shown in Table III, in which Compounds 10 and 11 are controls outside the scope of the invention.

TABLE III

| Compound | 10 | 11 | 12 | 13 | 14 |
|---|---|---|---|---|---|
| Butadiene-acrylonitrile polymer | 100 | 100 | 100 | 100 | 100 |
| Antioxidant | 2 | 2 | 2 | 2 | 2 |
| Magnesium oxide | 10 | 10 | 10 | 10 | 10 |
| Calcium oxide | 10 | 10 | 10 | 10 | 10 |
| Carbon black | 30 | 30 | 30 | 30 | 30 |
| Phenylene dimaleimide | 1 | 1 | 1 | 1 | 1 |
| Dicumyl peroxide | 3.5 | 3.5 | 3.5 | 3.5 | 3.5 |
| Polysulphidic silane | — | 0.5 | 1 | 2 | 4 |
| Peel strength (kN/m) | 1.3 | 1.2 | 1.6 | 2.5 | 2.5 |

Example 3

A fluoroelastomer compound was prepared according to the recipe of Example 1, Compound 2. A butadiene-acrylonitrile polymer compound was prepared according to the recipe of Example 2, Compound 10 and further such compounds were prepared by the addition of a silane compound to each as shown in Table IV. Laminates were prepared, cured and tested as in Example 1 with the results shown in Table IV, in which only Compound 21 is within the scope of this invention.

TABLE IV

| Compound | 20 | 21 | 22 | 23 | 24 | 25 |
|---|---|---|---|---|---|---|
| Silane additive | | | | | | |
| Polysulphidic silane | — | 2 | — | — | — | — |
| α-Methacryloxy propyl trimethoxy silane | — | — | 2 | — | — | — |
| α-glycidoxypropyl trimethoxy silane | — | — | — | 2 | — | — |
| α-Mercaptopropyl trimethoxy silane | — | — | — | — | 2 | — |
| Aminopropyl trimethoxy silane | — | — | — | — | — | 2 |
| Peel strength (kN/m) | 1.3 | 2.5 | 0.8 | 0.8 | 1.2 | 1.9 |

Example 4

Two fluoroelastomer compounds were prepared in which the only difference was the inclusion in one of a polysulphidic silane compound. Two butadiene-acrylonitrile polymer compounds were prepared in which the only difference was the inclusion in one of a polysulphidic silane compound. The recipes are shown in Table V. Laminates were prepared of each fluoroelastomer compound pressed onto each butadiene-acrylonitrile polymer compound followed by curing by heating at 160°C for 45 minutes. The peel strength data are shown in Table V. The laminates formed by adhering Compound 31 to each of Compounds 32 and 33 and by adhering Compound 33 to Compound 30 are within the scope of this invention, whereas the laminate formed by adhering Compound 30 to Compound 32 is outside the scope of the invention.

TABLE V

| Compound | 30 | 31 | 32 | 33 |
|---|---|---|---|---|
| Fluoroelastomer | 100 | 100 | — | — |
| Carbon black | 30 | 30 | — | — |
| Magnesium oxide | 10 | 10 | — | — |
| Calcium oxide | 10 | 10 | — | — |
| Antioxidant | 2 | 2 | — | — |
| Polysulphidic silane | — | 2 | — | — |
| | | | | |
| Butadiene-acrylonitrile polymer | — | — | 100 | 100 |
| Antioxidant | — | — | 2 | 2 |
| Magnesium oxide | — | — | 10 | 10 |
| Calcium oxide | — | — | 10 | 10 |
| Carbon black | — | — | 30 | 30 |
| Phenylene dimaleimide | — | — | 1 | 1 |
| Dicumyl peroxide | — | — | 3.5 | 3.5 |
| Polysulphidic silane | — | — | — | 2 |

Peel strength (kN/m)

| | |
|---|---|
| Compound 30/Compound 32 | 0.5 |
| Compound 31/Compound 32 | 1.3 |
| Compound 30/Compound 33 | 2 |
| Compound 31/Compound 33 | 2.6 |

Example 5

The butadiene-acrylonitrile polymer compounds were prepared as shown in Table VI where Silane-1 is bis - [3 - (triethoxysilyl) - propyl] - tetrasulphide and Silane-2 is bis - [triethoxysilyl - ethyltolylene] - tetrasulphide. As described in Example 1, layers of these compounds were pressed onto a layer of Compound 2 of Example 1 or a layer of a Viton compound, cured for 30 minutes at 160°C and the peel strength of the so-formed laminates was measured, the results being given in Table VI.

TABLE VI

| Compound | 40 | 41 | 42 | 43 | 44 | 45 |
|---|---|---|---|---|---|---|
| Butane-acrylonitrile polymer | 200 | 200 | 200 | 200 | 200 | 200 |
| Antioxidant | 4 | 4 | 4 | 4 | 4 | 4 |
| Magnesium | 20 | 20 | 20 | 20 | 20 | 20 |
| Calcium oxide | 20 | 20 | 20 | 20 | 20 | 20 |
| Carbon black (N-990) | 100 | 100 | 100 | 60 | 60 | 60 |
| Carbon black (N-550) | — | — | — | 40 | 40 | 40 |
| Dibutyl sebacate | 20 | 20 | 20 | 20 | 20 | 20 |
| Silane-1 | 4 | 4 | 4 | — | — | — |
| Silane-2 | — | — | — | 4 | 4 | 4 |
| Phenylene dimaleimide | — | — | — | 2 | — | — |
| Ethylene glycol dimethacrylate | 5 | — | — | — | 5 | — |
| Trimethylol propane trimethacrylate | — | 5 | — | — | — | — |
| 1,3-Butylene glycol dimethacrylate | — | — | 10 | — | — | 10 |
| 2,5-Bis(tert-butyl-peroxy)-2,5-dimethylhexane | 7 | 7 | 3 | 7 | 7 | 7 |
| Peel strength (kN/m) — to Compound 2 | 3.3 | 1.8 | 3.4 | — | — | — |
| — to Viton compound | — | — | — | 3.7 | 2.9 | 5.9 |

**Claims**

1. A method of bonding a layer of a fluoroelastomer compound to a layer of a butadiene-acrylonitrile polymer compound, wherein the fluoroelastomer is a polymer based on vinylidene fluoride and hexafluoropropylene and the butadiene-acrylonitrile polymer is a polymer prepared by free radical aqueous emulsion polymerisation and containing from 50 to 80% by weight butadiene and 20 to 50% by weight acrylonitrile, characterised in that a polysulphidic silane is incorporated into the fluoroelastomer compound, prior to bonding the layers together, and the layers are vulcanised in contact with each other, in which the polysulphidic silane is selected from bis[(alkoxysilyl)alkyl]tetrasulphides and bis[(alkoxysilyl)-aryl]tetrasulphides, and the amount thereof is from 1 to 5 parts by weight per 100 parts by weight of the fluoroelastomer compound.

2. A method of bonding a layer of a fluoroelastomer compound as defined in claim 1 to a layer of a butadiene-acrylonitrile polymer as defined in claim 1, characterised in that a polysulphidic silane compound as defined in claim 1 is incorporated into the butadiene-acrylonitrile polymer, prior to bonding the layers together, and the layers are vulcanised in contact with each other, in which the amount of the polysulphidic silane compound is from 1 to 5 parts by weight per 100 parts by weight of the butadiene-acrylonitrile polymer.

3. A method of bonding a layer of a fluoroelastomer compound as defined in claim 1 to a layer of a butadiene-acrylonitrile polymer as defined in claim 1, characterised in that a polysulphidic silane compound as defined in claim 1 is incorporated into both compounds, prior to bonding the layers together, and the layers are vulcanised in contact with each other, in which the amount of the polysulphidic silane compound is from 1 to 3 parts by weight per 100 parts by weight of the fluoroelastomer and butadiene-acrylonitrile polymer compounds.

4. A method according to any of claims 1 to 3, in which the butadiene-acrylonitrile polymer compound contains an organic peroxide curing agent.

5. A method according to any preceding claim, in which the butadiene-acrylonitrile polymer compound comprises a butadiene-acrylonitrile polymer, a filler selected from carbon black, silica and barytes, optionally a compatible plasticiser, a metal oxide selected from magnesium, cadmium, calcium and zinc oxides, an antioxidant, an organic peroxide and a curable coagent.

6. A method according to any preceding claim, in which the fluoroelastomer compound comprises a fluoroelastomer, an incorporated cure system, an inorganic acid acceptor selected from magnesium oxide, cadmium oxide, calcium oxide, calcium hydroxide and zinc oxide, and a filler selected from carbon black, silica and barytes.

7. A method according to any preceding claim, in which the layers of the fluoroelastomer and butadiene-acrylonitrile polymer compounds are vulcanised by heating to from 150 to 180°C for from 10 to 60 minutes.

8. A method according to any preceding claim, in which the polysulphidic silane is selected from bis[3-(triethoxysilyl)propyl]tetrasulphide and bis[(triethoxysilyl)ethyltolylene]tetrasulphide.

9. A hose assembly comprising a laminate produced by a method according to any preceding claim, in which the inner layer is the fluoroelastomer compound and the outer layer is the butadiene-acrylonitrile polymer compound.

## Patentansprüche

1. Verfahren zum Verbinden einer Schicht aus einer Fluorelastomerverbindung mit einer Schicht aus einer Butadien/Acrylnitril-Polymerverbindung, wobei das Fluorelastomere ein Polymeres auf der Basis von Vinylidenfluorid und Hexafluorpropylen ist und das Butadien/Acryl-Polymere ein Polymeres ist, das hergestellt wird durch eine freie radikalische wäßrige Emulsionspolymerisation, und 50 bis 80 Gew.-% Butadien und 20 bis 50 Gew.-% Acrylnitril enthält, dadurch gekennzeichnet, daß ein polysulfidisches Silan in die Fluorelastomerverbindung vor dem Verbinden der Schichten miteinander eingebracht wird und die Schichten in Kontakt miteinander vulkanisiert werden, wobei das polysulfidische Silan ausgewählt wird aus bis [(Alkoxysilyl)alkyl]tetrasulfiden und bis[(Alkoxysilyl)aryl]tetrasulfiden, und die Menge 1 bis 5 Gew.-Teile pro 100 Gew.-Teile der Fluorelastomerverbindung beträgt.

2. Verfahren zum Verbinden einer Schicht aus einer Fluorelastomerverbindung, wie in Anspruch 1 definiert, mit einer Schicht aus einem Butadien/Acrynitril-Polymeren, wie in Anspruch 1 definiert, dadurch gekennzeichnet, daß eine polysulfidische Silanverbindung, wie in Anspruch 1 definiert, in das Butadien/Acrylnitril-Polymere vor dem Verbinden der Schicht miteinander eingebracht wird und die Schichten in Kontakt miteinander vulkanisiert werden, wobei die Menge der polysulfidischen Silanverbindung 1 bis 5 Gew.-Teile pro 100 Gew.-Teile des Butadien/Acrylnitril-Polymeren beträgt.

3. Verfahren zur Verbindung einer Schicht aus einer Fluorelastomerverbindung, wie in Anspruch 1 definiert, mit einer Schicht aus einem Butadien/Acrylnitril-Polymeren, wie in Anspruch 1 definiert, dadurch gekennzeichnet, daß eine polysulfidische Silanverbindung, wie in Anspruch 1 definiert, in beide Verbindungen vor dem Verbinden der Schichten miteinander eingebracht wird und die Schichten in Kontakt miteinander vulkanisiert werden, wobei die Menge der polysulfidischen Silanverbindung 1 bis 3 Gew.-Teile pro 100 Gew.-Teile der Fluorelastomerverbindung und der Butadien/Acrylnitril-Polymerverbindung beträgt.

4. Verfahren nach einem der Ansprüche 1 bis 3, dadurch gekennzeichnet, daß die Butadien/Acrylnitril-Polymerverbindung ein organisches Peroxidhärtungsmittel enthält.

5. Verfahren nach einem der vorhergehenden Ansprüche, dadurch gekennzeichnet, daß die Butadien/Acrylnitril-Polymerverbindung aus einem Butadien/Acrylnitril-Polymeren, einem Füllstoff, ausgewählt aus Ruß, Siliziumdioxid un Baryten, gegebenenfalls einem verträglichen Weichmacher, einem Metalloxid, ausgewählt aus Magnesiumoxid, Kadmiumoxid, Kalziumoxid und Zinkoxid, einem Antioxidationsmittel, einem organischen Peroxid und einem härtbaren Coagens besteht.

6. Verfahren nach einem der vorhergehenden Ansprüche, dadurch gekennzeichnet, daß die Fluorelastomerverbindung aus einem Fluorelastomeren, einem eingebrachten Härtungssystem, einem anorganischen Säureakzeptor, ausgewählt aus Magnesiumoxid, Kadmiumoxid, Kalziumoxid, Kalziumhydroxid und Zinkoxid, und einem Füllstoff, ausgewählt aus Ruß, Siliziumdioxid und Baryten, besteht.

7. Verfahren nach einem der vorhergehenden Ansprüche, dadurch gekennzeichnet, daß die Schichten aus der Fluorelastomerverbindung und der Butadien/Acrylnitril-Polymerverbindung durch Erhitzen auf 180°C während 10 bis 60 Minuten vulkanisiert werden.

8. Verfahren nach einem der vorhergehenden Ansprüche, dadurch gekennzeichnet, daß das polysulfidische Silan aus bis[3-(Triethoxysilyl)propyl]tetrasulfid und bis[(Triethoxysilyl)ethyltolylen]tetrasulfid ausgewählt wird.

9. Schlauchanordnung aus einem Laminat, hergestellt nach einem Verfahren gemäß einem der vorhergehenden Ansprüche, wobei die innere Schicht aus der Fluorelastomerverbindung und die äußere Schicht aus der Butadien/Acrylnitril-Polymerverbindung besteht.

## Revendications

1. Procédé de liaison d'une couche d'un élastomère fluoré à une couche d'un polymère butadiène-acrylonitrile, dans lequel l'élastomère fluoré est un polymère à base de fluorure de vinylidène et d'hexafluoropropylène et le polymère butadiène-acrylonitrile est un polymère préparé par polymérisation en émulsion aqueuse par radicaux libres et contenant 50 à 80% en poids de butadiène et 20 à 50% en poids d'acrylonitrile, caractérisé en ce qu'un silane polysulfuré est incorporé à l'élastomère fluoré, avant que les couches ne soient liées l'une à l'autre, et ces dernières sont vulcanisées au contact l'une de l'autre, le silane polysulfuré est choisi entre des tétrasulfures de bis[(alkoxysilyl)alkyle] et des tétrasulfures de bis[(alkoxysilyl)aryle] et sa quantité va de 1 à 5 parties en poids pour 100 parties en poids de l'élastomère fluoré.

2. Procédé de liaison d'une couche d'un élastomère fluoré tel que défini dans la revendication 1 à une couche d'un polymère butadiène-acrylonitrile tel que défini dans la revendication 1, caractérisé en ce qu'un silane polysulfuré tel que défini dans la revendication 1 est incorporé au polymère butadiéne-acrylonitrile, avant que les couches ne soient liées l'une à l'autre, et ces dernières sont vulcanisées au contact l'une de l'autre, la quantité du silane polysulfuré allant de 1 à 5 parties en poids pour 100 parties en poids du polymère butadiène-acrylonitrile.

3. Procédé de liaison d'un couche d'un élastomère fluoré tel que défini dans la revendication 1 à une couche d'un polymère butadiène-acrylonitrile tel que défini dans la revendication 1, caractérisé en ce qu'un silane polysulfuré tel que défini dans la revendication 1 est incorporé aux deux composés, avant que les couches ne soient liées l'une à l'autre, et les couches sont vulcanisées au contact l'une de l'autre la quantité de silane polysulfuré allant de 1 à 3 parties en poids pour 100 parties en poids de l'élastomère fluoré et du polymère butadiène-acrylonitrile.

4. Procédé suivant l'une quelconque des revendications 1 à 3, dans lequel le polymère butadiène-acrylonitrile contient un peroxyde organique comme agent vulcanisiert.

5. Procédé suivant l'une quelconque des revendications précédentes, dans lequel le polymère butadiène-acrylonitrile comprend un polymère butadiène-acrylonitrile, une charge choisie entre le noir de carbone, la silice et les barytes, éventuellement un plastifiant compatible, un oxyde métallique choisi entre les oxydes de magnésium, cadmium, calcium et zinc, un antioxydant, un peroxyde organique et un co-agent vulcanisable.

6. Procédé suivant l'une quelconque des revendications précédentes, dans lequel l'élastomère fluoré comprend un élastomère fluoré, un système vulcanisant incorporé, un accepteur d'acide inorganique choisi entre l'oxyde de magnésium, l'oxyde de cadmium, l'oxyde de calcium, l'hydroxyde de calcium et l'oxyde de zinc, et une charge choisie entre le noir de carbone, la silice et les barytes.

7. Procédé suivant l'une quelconque des revendications précédentes, dans lequel les couches de l'élastomère fluoré et du polymère butadiène-acrylonitrile sont vulcanisées par chauffage à 150—180°C pendant 10 à 60 minutes.

8. Procédé suivant l'une quelconque des revendications précédentes, dans lequel le silane polysulfuré est choisi entre le tétrasulfure de bis[3-(triéthoxysilyl)propyle] et le tétrasulfure de bis[(triéthoxysilyl)éthyl-tolylène].

9. Ensemble pour tuyau souple comprenant un stratifié produit par un procédé suivant l'une quelconque des revendications précédentes, dans lequel la couche interne est formée de l'élastomère fluoré et la couche externe est formée du polymère butadiène-acrylonitrile.